# EUROPÄISCHE PATENTANMELDUNG

(11) **EP 1 306 190 A2**
(43) Veröffentlichungstag der Anmeldung: **02.05.2003**
(21) Anmeldenummer: 02023957.0
(22) Anmeldetag: 25.10.2002
(51) Int. Cl.: B29C 47/78, B29C 47/92

(54) **Extrusionsanlage und Verfahren zum Herstellen von Schaumstoffprodukten, wobei der Extrusionsanlage mindestens zwei Kühlaggregate / Kühlextruder parallel nachgeschaltet sind**

(30) Priorität: 27.10.2001 DE 10152378
(71) Anmelder: SMS-Folientechnik GmbH & Co. KG, 1239 Wien (AT)
(72) Erfinder: King, Nick, Pity ME, Durham DH15PP (GB); Dröge, Berthold, 2440 Gramatneusiedl (AT); van Lück, Frank, 1100 Wien (AT)
(74) Vertreter: Gosdin, Michael

(57) **Zusammenfassung**

Die Erfindung betrifft eine Extrusionsanlage zur Erzeugung eines Schaumerzeugnisses, die aus mindestens einem Aufschmelzextruder zum Plastifizieren und Homogenisieren des Kunststoffmateriales und aus mindestens zwei Kühlaggregaten zum Abkühlen der Kunststoffschmelze besteht.

Erfindungsgemäß ist vorgesehen, dass die mindestens beiden Kühlaggregate identisch sind, oder über Mittel derart gesteuert oder geregelt werden können, dass die austretende Kunststoffschmelze aus beiden Aggregaten weitgehendst identische Materialeigenschaften aufweist.

Weiterhin betrifft die Erfindung ein Verfahren zum Erzeugen eines Schaumerzeugnisses, das die Schritte umfaßt: a) Plastifizieren und Homogenisieren von Kunststoff in einem Aufschmelzextruder, b) Aufteilen des Schmelzestranges in mindestens zwei Schmelzestränge, c) Abkühlen der Schmelzstränge in getrennten Kühlaggregaten, d) Zusammenführen der mindestens zwei Schmelzestränge in einer Vereinigungsstelle, um den vereinigten Schmelzestrang einem Extrusionswerkzeug zuzuführen.

Erfindungsgemäß ist hier vorgesehen, dass der Schmelzestrom derart beeinflußt wird, dass die Materialeigenschaften, insbesondere Druck und Temperatur, vor der Vereinigungsstelle in den mindestens zwei Schmelzesträngen weitgehendst identisch sind.

## Beschreibung

Die Erfindung betrifft eine Extrusionsanlage zur Erzeugung eines Schaumerzeugnisses, die aus mindestens einem Aufschmelzextruder zum Plastifizieren und Homogenisieren des Kunststoffmateriales und aus mindestens zwei Kühlaggregaten zum Abkühlen der Kunststoffschmelze besteht, sowie aus einem Verfahren zum Erzeugen eines Schaumerzeugnisses, das die Schritte umfaßt: a) Plastifizieren und Homogenisieren von Kunststoff in einem Aufschmelzextruder, b) Aufteilen des Schmelzestranges in mindestens zwei Schmelzestränge, c) Abkühlen der Schmelzestränge in getrennten Kühlaggregaten, d) Zusammenführen der mindestens zwei Schmelzestränge in einer Vereinigungsstelle, um den vereinigten Schmelzestrang einem Extrusionswerkzeug zuzuführen.

Es ist bekannt, dass bei der Herstellung von Kunststoffschäumen der Kunststoff zwei gegenteiligen Temperaturbehandlungen unterzogen wird. In einem ersten Schritt muss der in fester Form vorliegende Kunststoff aufgeschmolzen werden. Sobald der Kunststoff eine ausreichende Schmelzequalität erreicht, wird meist als zu verschäumendes Medium Gas injiziert. Dies verändert das Fließverhalten der Kunststoffschmelze. Diese kann durch die Gasinjektion stark verflüssigt werden. Eine ausreichende Schmelzefestigkeit ist jedoch notwendig, um nach Extruder- bzw. Werkzeugaustritt einen stabilen Schaum zu erhalten. Ist die Schmelzefestigkeit nicht hoch genug, so zerplatzen die beim Aufschäumen entstehenden Blasen.

Aus diesem Grund wird in einem 2. Schritt nach der Gasinjektion die Kunststoffschmelze gekühlt, um hierdurch die Viskosität und damit die Schmelzefestigkeit der Kunststoffschmelze zu erhöhen.

Bei kleineren Extrudergrössen - bis max. 90 mm Extruderdurchmesser - können Aufheiz- und Abkühlvorgang in einem Extruder durchgeführt werden. Ab einer bestimmten Extrudergrösse ist dies nicht mehr zweckmäßig. Das Aufschmelzen des Kunststoffes im Extruder wird sowohl durch eine externe Beheizung als auch durch die Antriebsleistung des Extruders gewährleistet. Dabei beträgt der Anteil der externen Temperierung meist nur 20 - 40 %, die restliche Energie wird über das Drehmoment der Schnecke (Reibung) eingeleitet.

Je länger und damit auch grösser der Extruder nun wird, desto höhere Antriebsleistung zum Drehen der Schnecke muss installiert werden und desto mehr Energie wird über das Drehmoment der Schnecke in den Kunststoff eingebracht. Ab einer bestimmten Extruderlänge kann dementsprechend nicht mehr effizient über die Oberfläche des Extruderzylinders und über eine externe Kühlung des Extruders der Schmelze die zum Erreichen einer bestimmten Schmelzefestigkeit notwendige Energie entzogen werden. Die gleichzeitig durch das Schneckendrehmoment eingebrachte Energie führt dann zu einem ineffizienten Prozess.

Aus diesem Grund wird ab einer bestimmten Extrudergrösse der Schaumextrusionsprozess über 2 getrennte Extruder realisiert, wobei der erste Extruder die Aufgabe des Plastifizierens und Homogenisierens übernimmt und der zweite nach der Gasinjektion die Kühlaufgabe wahrnimmt. Die Balance zwischen Energieeintrag über Schneckendrehmoment und abführbarer Kühlleistung wird über Baugrössen - meist ist der Kühlextruder grösser als der Aufschmelzextruder - und Drehzahlen - durch die sehr geringe Drehzahl des Kühlextruders wird weniger Energie in die Schmelze eingebracht - realisiert.

Möchte man nun die Durchsatzleistung steigern, so ist die Kühlkapazität des Kühlextruders der begrenzende Faktor. Obwohl mit vergrösserter Extruderbaugrösse (Durchmesser und Länge) die Oberfläche steigt, kann ab einer bestimmten Extrudergrösse nicht mehr ausreichend Energie über die Oberfläche abgeführt werden, da die notwendige Antriebsleistung zu viel Energie in die Schmelze einbringt.

Somit wird in Schaumanlagen im ersten Extruder der Kunststoff aufgeschmolzen und homogenisiert. Gas wird der Kunststoffschmelze zudosiert und eingemischt, bevor die Kunststoffschmelze dem Kühlextruder zugeführt wird. Trotz weiter starker Energieeinbringung kann über die Oberfläche des Extruderzylinders Energie entzogen werden. Nach ausreichendem Energieentzug wird die Kunststoffschmelze nach Durchlaufen eines Werkzeuges aufgeschäumt. Optional beinhalten Schaumprozesse die Verfahrensstufen Filtration oder Homogenisierung in zusätzlichen, meist statischen, Mischern.

**Aufgabe** der Erfindung ist es, eine Vorrichtung und ein Verfahren anzubieten, die bzw. das es ermöglicht, den Schmelzestrom stärker zu kühlen, ohne die Materialeigenschaften wesentlich zu beeinflussen.

Die **Lösung** der Aufgabe ist in Verbindung mit dem Oberbegriff des Anspruchs 1 dadurch gekennzeichnet, dass die mindestens beiden Kühlaggregate identisch sind, oder über Mittel derart gesteuert oder geregelt werden können, dass die austretende Kunststoffschmelze aus beiden Aggregaten weitgehendst identische Materialeigenschaften aufweist.

Dies wird beispielsweise erreicht, wenn als Kühlaggregate ein Kühlextruder eingesetzt wird. Vorteilhafterweise ermöglicht die Extruderschnecke des Kühlextruders einen Druckaufbau in der Schmelze.

Es ist aber auch denkbar, dass als Kühlaggregate ein Kühlextruder in Verbindung mit einer Pumpe - bevorzugt wir eine Zahnradpumpe - eingesetzt wird. Da der Schmelzevorschub durch die Pumpe gewährleistet ist, kann die Extruderschnecke des Kühlextruders einen Druckabbau in der Schmelze ermöglichen. Anstelle des Kühlextruders können auch andere Kühlelemente wie Wärmetauscher oder Fallschächte Verwendung finden.

Werden unterschiedliche Kühlaggregate in den einzelnen Schmelzesträngen eingesetzt, ist vorgesehen, über geeignete Mittel zu erreichen, dass die austretende Schmelze zumindestens an der Vereingungsstelle weitgehendst identische Materialeigenschaften aufweist. Die eingesetzten Mittel zum Steuern oder Regeln der Kühlaggregate können die Drehzahl von eingesetzten Kühlextrudern verändern, wobei die Drehzahl der beiden Kühlaggregate unterschiedlich sein kann.

Die **Lösung** des erfindungsgemässen Verfahrens ist dadurch gekennzeichnet, dass der Schmelzestrom derart beeinflußt wird, dass die Materialeigenschaften, insbesondere Druck und Temperatur, vor der Vereinigungsstelle in den mindestens zwei Schmelzesträngen weitgehendst identisch sind.

In einer Weiterbildung des Verfahrens ist vorgesehen, dass während des Verfahrensschrittes c) Materialeigenschaften, insbesondere Druck und Temperatur, ermittelt werden und bei Abweichung der ermittelten Materialeigenschaften zu einem Sollwert die Kühlleistung und/oder der Schmelzestrom verändert werden kann, wobei als Sollwerte die ermittelten Materialeigenschaften in einem der mindestens zwei Schmelzestränge bestimmbar sind.

Als Schaumerzeugnis ist hier an eine Schaumplatte gedacht, es ist aber auch genauso möglich, mit dieser Vorrichtung und nach diesem Verfahren eine Schaumfolie, ein Schaumprofil oder ähnliche Produkte zu erzeugen.

In der Zeichnung ist ein Ausführungsbeispiel dargestellt.
- Fig. 1: zeigt eine Alternative A und in
- Fig. 2: ist eine weitere Möglichkeit der Erfindung dargestellt.

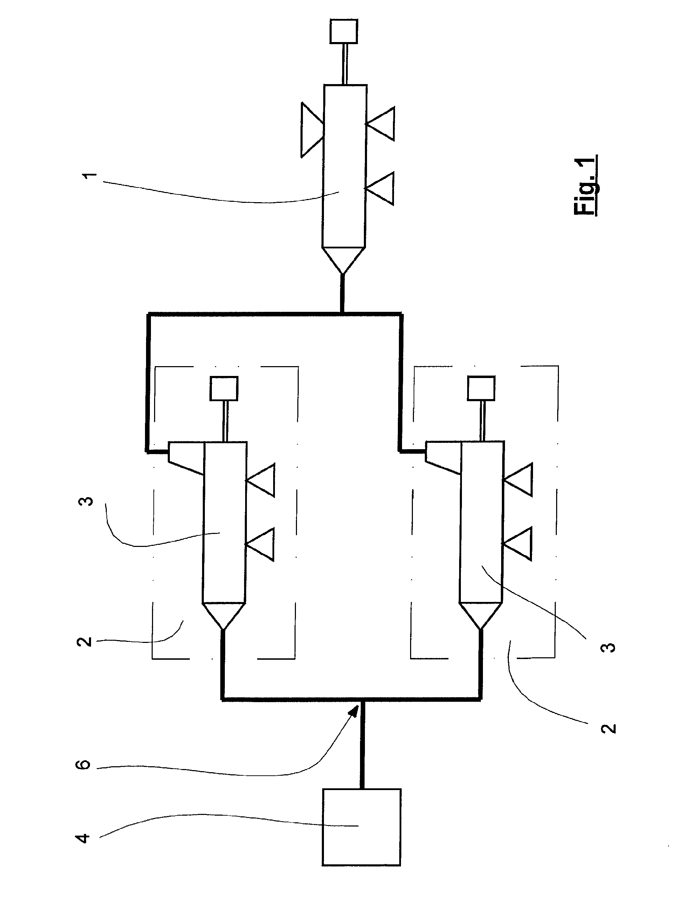

Im Aufschmelzextruder1, gemäß Figur 1, wird das Kunststoffgranulat aufgeschmolzen und anschließend ausgetrieben. Die aufgeschmolzene Kunststoffmasse wird in zwei Ströme aufgeteilt und zwei Kühlextrudern 3 zugeführt, die beide gleich aufgebaut sind, damit die beiden Schmelzeströme nicht unterschiedlich beaufschlagt werden. Anschließend werden die beiden Schmelzeströme wieder zusammengeführt und dem Extrusionswerkzeug 4 zugeführt.

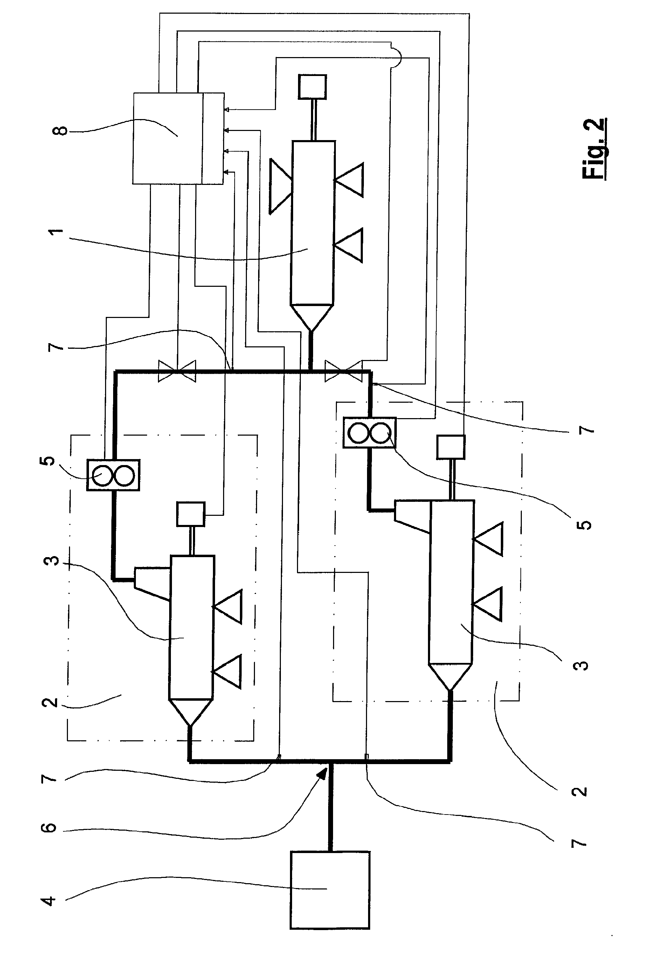

Eine alternative Ausführung der Erfindung zeigt Figur 2, hier wird vor das Kühlaggregat 2 zunächst eine Zahnradpumpe 5 eingesetzt und der Zahnradpumpe 5 ein Kühlextruder 3 nachgeschaltet und dann erst die Schmelzeströme wieder zusammengeführt. Dies hat den Vorteil, dass die eingesetzten Schnecken in den Kühlextrudern 3 druckabbauend sein können. Es können auch Wärmetauscher anstelle der Kühlextruder verwendet werden, da eine Förderung der Schmelze durch die Schmelzepumpe sichergestellt ist. Damit die beiden Schmelzeströme in der Vereinigungssstelle 6 weitgehendst identische Materialeigenschaften aufweisen, ist vorgesehen die Parameter der Kühlextruder 3 und/oder Schmelzepumpe 5 zu beeinflussen. Hierfür sind geeignete Meßmittel 7, wie Druckaufnehmer, Thermofühler etc. vorgesehen, die mit der Steuerung 8 der Extruder in einer Regelverbindung stehen.

### Bezugszeichenliste:

- 1: Aufschmelzextruder
- 2: Kühlaggregat
- 3: Kühlextruder
- 4: Extrusionswerkzeug
- 5: Zahnradpumpe
- 6: Vereinigungsstelle der Schmelzeströme
- 7: Meßmittel
- 8: Steuerung

## Patentansprüche

1. Extrusionsanlage zur Erzeugung von einem Schaumerzeugnis, die aus mindestens einem Aufschmelzextruder (1) zum Plastifizieren und Homogenisieren des Kunststoffmateriales und zwei Kühlaggregaten (2) zum Abkühlen der Kunststoffschmelze besteht,
**dadurch gekennzeichnet, dass**
die beiden Kühlaggregate (2) identisch sind, oder über Mittel derart gesteuert oder geregelt werden können, dass die austretende Kunststoffschmelze aus beiden Aggregaten weitgehendst identische Materialeigenschaften aufweist.

2. Extrusionsanlage nach Anspruch 1, **dadurch gekennzeichnet, dass** als Kühlaggregate (2) ein Kühlextruder (3) eingesetzt wird.

3. Extrusionsanlage nach Anspruch 2, **dadurch gekennzeichnet, dass** die Extruderschnecke des Kühlextruders (3) einen Druckaufbau in der Schmelze ermöglicht.

4. Extrusionsanlage nach Anspruch 1, **dadurch gekennzeichnet, dass** als Kühlaggregate (2) ein Kühlextruder (3) in Verbindung mit einer Pumpe (4), vorzugsweise einer Zahnradpumpe, eingesetzt wird.

5. Extrusionsanlage nach Anspruch 4, **dadurch gekennzeichnet, dass** die Extruderschnecke des Kühlextruders (3) einen Druckabbau in der Schmelze ermöglicht.

6. Extrusionsanlage nach Anspruch 1, **dadurch gekennzeichnet, dass** die Kühlaggregate (2) Pumpen in Verbindung mit Kühlelementen, vorzugsweise Wärmetauscher oder Fallschächte, sind.

7. Extrusionsanlage nach Anspruch 1, **dadurch gekennzeichnet, dass** die Mittel zum Steuern oder Regeln der Kühlaggregate (2) die Drehzahl von eingesetzten Kühlextrudern (3) verändern können, wobei die Drehzahl der beiden Kühlaggregate (2) unterschiedlich sein kann.

8. Extrusionsanlage nach einem der Ansprüche 1 bis 7, **dadurch gekennzeichnet, dass** das Schaumerzeugnis eine Schaumplatte, eine Schaumfolie oder ein Schaumprofil ist.

9. Verfahren zur Erzeugung eines Schaumerzeugnisses, das die Schritte umfasst:
a) Plastifizieren und Homogenisieren von Kunststoff in einem Aufschmelzextruder (1),
b) Aufteilen des Schmelzestranges in mindestens zwei Schmelzestränge,
c) Abkühlen der Schmelzstränge in getrennten Kühlaggregaten,
d) Zusammenführen der mindestens zwei Schmelzestränge in einer Vereinigungsstelle, um den vereinigten Schmelzestrang einem Extrusionswerkzeug zuzuführen,
**dadurch gekennzeichnet, dass**
der Schmelzestrom derart beeinflußt wird, dass die Materialeigenschaften, insbesondere Druck und Temperatur, vor der Vereinigungsstelle in den mindestens zwei Schmelzesträngen weitgehendst identisch sind.

10. Verfahren nach Anspruch 9, **dadurch gekennzeichnet, dass** während des Verfahrensschrittes c) Materialeigenschaften, insbesondere Druck und Temperatur, ermittelt werden.

11. Verfahren nach Anspruch 10, **dadurch gekennzeichnet, dass** bei Abweichung der ermittelten Materialeigenschaften zu einem Sollwert die Kühlleistung und/oder der Schmelzestrom verändert werden kann, wobei als Sollwerte die ermittelten Materialeigenschaften in einem der mindestens zwei Schmelzestränge bestimmbar sind.
